# EUROPEAN PATENT APPLICATION

(11) **EP 1 942 049 A2**
(43) Date of publication of application: **09.07.2008**
(21) Application number: 08075011.0
(22) Date of filing: 04.01.2008
(51) Int. Cl.: B62J 6/02, B60Q 1/12, B60Q 1/115

(54) **Illumination device with control of the alignment of the light beam relative to a fixed plane**

(30) Priority: 08.01.2007 IT MI20070015
(71) Applicant: Ecie S.r.l., Lainate MI (IT)
(72) Inventor: Delfi, Luigi, Lainate (MI) (IT)
(74) Representative: Raimondi, Margherita

(57) **Abstract**

Illumination device for a two-wheeled vehicle, comprising a headlamp (1) which is associated with a respective light source (2) and which has, defined thereon, a demarcation line (D) for the light beam emitted, first means (R1,R2;R12) for detecting the distance (d1,d2) from a fixed plane of reference points, a first unit (100) for adjusting the inclination (α°) of the demarcation line (D) of the headlamp about a longitudinal axis (X-X); said device comprising second means (S1,S2) for detecting the inclination (β°) of the optical axis about a transverse axis (Y-Y), a second unit (200) for adjusting the inclination (β°) of the optical axis of the headlamp about said transverse axis (Y-Y); a control unit (300) able to receive signals from said first and second detection means (R1,R2,S1,S2;R12,S1,S2) and selectively activate/deactivate operation of said first control unit (100) and/or second control unit (200) in order to keep the demarcation line (D) and the optical axis of the headlamp correctly oriented with respect to the said fixed surface.

## Description

The present invention relates to an illumination device, in particular for two-wheeled vehicles, having means for controlling the direction of the light beam which are able to compensate for the variations in inclination of the position resulting from rolling and/or pitching movements of the said vehicle.

It is known in the technical sector of two-wheeled vehicles that there exists the need to equip them with long-beam and/or dipped-beam headlights which are able to illuminate correctly the road during travel.

Headlights of various types are also known, these all having the characteristic feature that the light source emits light always in the same direction, even when the vehicle is travelling around a bend where the typical inclination of the motorcycle directs the light towards zones which are far from those actually travelled along, obliging the rider to ride in dangerous conditions owing to the badly lit road surface.

A similar situation arises following variations in the inclination of the vehicle about a horizontal axis owing to variations in the load, braking or accelerations during which the light beam is raised/lowered with respect to its correctly aligned position.

Also known from the publication EP 1,738,957 in the name of the same present Applicants is a lamp provided with devices which compensate for the inclination of the vehicle based on the selective switching on/off of illuminating segments.

Although fulfilling its function, this lamp is based, however, on the use of LED light sources and is able to compensate only for variations in the position following rolling of the vehicle.

The technical problem which is posed, therefore, is to provide an illumination device, in particular a headlamp for two-wheeled vehicles, which allows the surface travelled along to be illuminated correctly, keeping the demarcation line of the illuminating part parallel to the ground even when the vehicle is inclined during travel around bends (rolling movement) and/or when there are variations in the inclination about a transverse horizontal axis (pitching).

In connection with this problem it is also required that this device may use light sources of the conventional type, should have small dimensions, be easy and inexpensive to produce and assemble and be able to be installed easily also on already existing vehicles using normal standardised connection means.

These results are obtained according to the present invention by an illumination device for a two-wheeled vehicle, comprising a headlamp which is associated with a respective light source and which has, defined thereon, a demarcation line for the light beam emitted, first means for detecting the distance from a fixed plane of reference points, a first unit for adjusting the inclination of the demarcation line of the headlamp about a longitudinal axis; said device comprising second means for detecting the inclination of the optical axis about a transverse axis, a second unit for adjusting the inclination of the optical axis of the headlamp about said transverse axis; a control unit able to receive signals from said first and second detection means and selectively activate/deactivate operation of said first and/or second control unit in order to keep the demarcation line and the optical axis of the headlamp correctly oriented with respect to the said fixed surface.

Further details may be obtained from the following description of a non-limiting example of embodiment of the object of the present invention provided with reference to the accompanying drawings in which:
- Figures 1a, 1b show a front view of the motorcycle inclined and a top plan view of the area illuminated by a conventional headlamp;
- Figure 2 shows a schematic front view of a motorcycle with an illumination device according to the present invention;
- Figure 3 shows a schematic front view of the illumination device according to the present invention;
- Figure 4 shows a partly sectioned side view of the headlamp according to Fig. 3;
- Figure 5 shows a schematic cross-section along the plane indicated by the line V-V in Fig. 3;
- Figure 6 shows a block diagram of the control unit for controlling the device according to the invention;
- Figures 7a,7b show a front view of the motorcycle inclined in one direction and in the opposite direction, respectively;
- Figures 8a,8b show a front view of the device according to the invention during compensation of the rolling movement in one direction and in the opposite direction, respectively;
- Figure 9 shows a top plan view of the area illuminated by the device according to the present invention in both cases;
- Figure 10 shows a schematic cross-section along the plane indicated by the line X-X in Fig. 3; and
- Figures 11a, 11b show a partially sectioned schematic side view of the device according to the invention during compensation of the pitching movement in one direction and in the opposite direction, respectively.

As shown, the illumination device according to the present invention comprises a headlamp 1, for example of the poly-ellipsoidal type, provided with a light source 2 of the conventional type and an optical axis conventionally coinciding with a longitudinal reference axis X-X, and with a demarcation line D for the illumination area conventionally assumed as coinciding with a transverse axis Y-Y.

The headlamp 1 is connected to a first unit 100 for adjusting the inclination of the demarcation line D of the headlamp 1 about the longitudinal axis X-X and to a second unit 200 for adjusting the inclination of the optical axis about the transverse axis Y-Y.

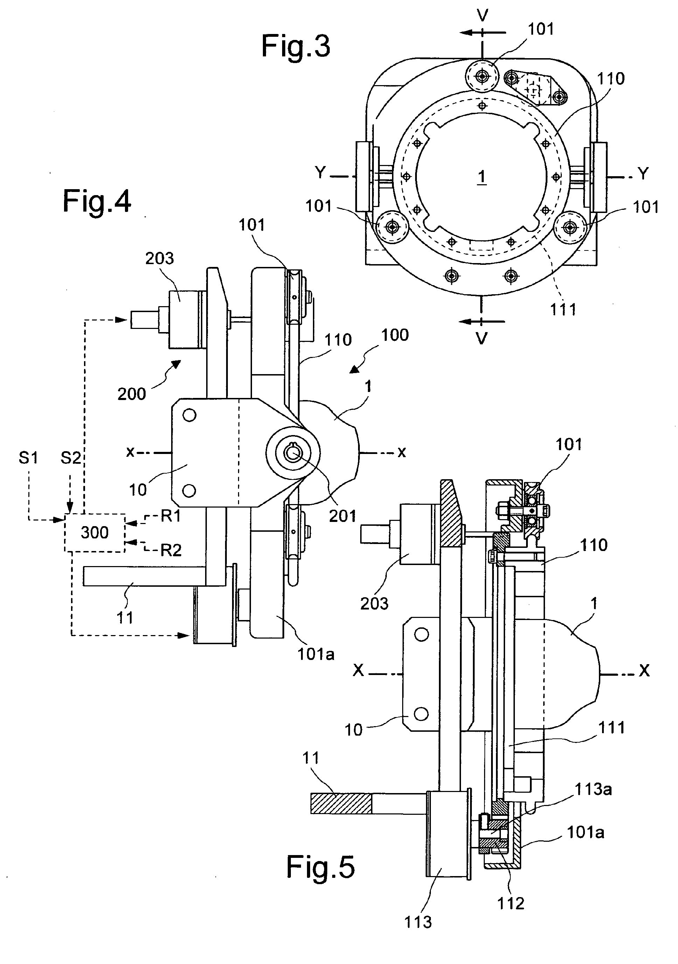

In greater detail and as shown in Figs. 3, 4 and 5, the device comprises a fixed flange 10 fastened to the chassis 11 of the vehicle and said first adjusting unit 100 comprises a support bracket 101a on which three fixed pulleys 101 with an axis of rotation parallel to the longitudinal axis X-X are pivotably mounted; said pulleys 101 are preferably arranged at relative angles of 120° so as to determine the retention and correct centring of a ring 110 which is free to rotate about the longitudinal axis X-X; a toothed rim 111 is formed on the inner surface of said ring 110 and is able to mesh with a pinion 112 mounted on the shaft 113a of an actuating motor 113 in turn fastened to the support bracket 101a by means of a screw-type fixing system which is per se conventional.

Preferably the motor 113 is of the stepper type and is connected to the control unit 300 which manages operation thereof.

The headlamp 1 is provided externally with sensors R1 and R2 which are positioned mutually symmetrically relative to the longitudinal axis of the vehicle and are able to detect the distance d1 and d2 of the said sensors - or equivalent, different, respective reference points - from the surface of the road along which the vehicle is travelling, emitting a corresponding electric signal sent to receiving means 310 and processing means 320 of the control unit 300.

In a further embodiment it is envisaged that the two sensors R1 and R2 may advantageously be replaced by a gyroscopic part R12 (not shown) which is in turn able to detect the variations in inclination (rolling movement) of the vehicle and emit a corresponding signal for the control unit 300, with the advantage that the gyroscope R12 may be arranged in any position of the vehicle.

As shown in Figs. 4, 10, 11a, 11b, the entire unit 100 is also mounted on a pair of pivots 201 which are parallel to the transverse axis Y-Y and fastened to the ring 110 in diametral positions thereon and form part of the said second means 200 for controlling the inclination of the optical axis.

Said pivots 201 are seated on respective bearings 202 which are integral with the fixed chassis 11 of the vehicle, forming a transverse fixed axis about which the entire unit 100 is able to rotate upon operation of a linear motor 203 fastened to the fixed chassis 11 and connected to the ring 110 by means of a ball joint 203b which is fastened to the free end of the shaft 203a of the motor 203.

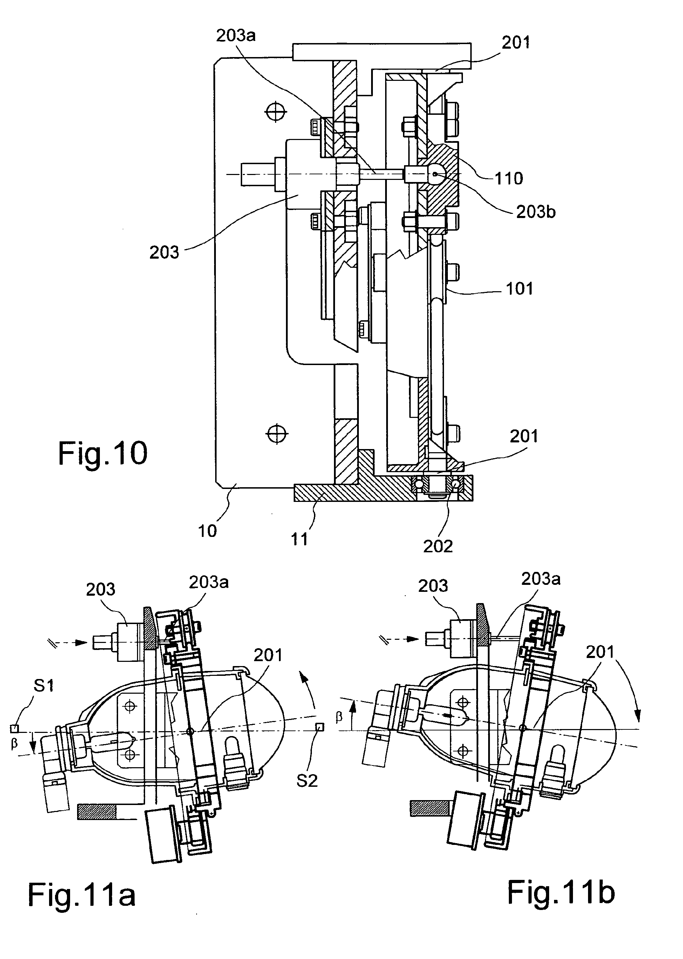

The motor 203 is controlled by the control unit 300 which manages operation thereof, receiving signals corresponding to the variation in position about the transverse axis Y-Y and emitted by corresponding sensors S1,S2 (only schematically shown in Fig. 11a) arranged along the longitudinal axis of the vehicle and able to detect the relative distance thereof from the surface of the road which the vehicle is travelling along, emitting a corresponding signal sent to receiving means 410 and processing means 420 of the control unit 300.

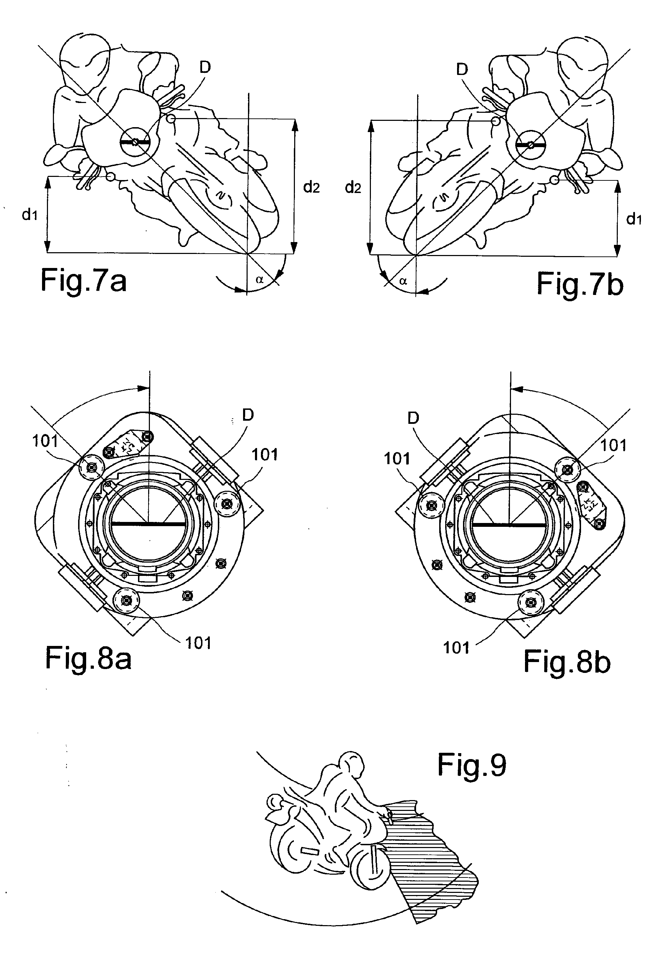

With this configuration, the operating principle of the device is as follows:
- upon switching-on of the lamp the sensors R1, R2, S1, S2 and the control unit 300 are also automatically activated;
- the sensors start to detect the respective distances d1 and d2 from the ground;
- a corresponding signal is sent to the control unit 300;
- inside said control unit the processing means 320,420 compare the two distances d1,d2, determining, depending on the difference between them, the angle of inclination α° of the vehicle produced by the rolling movement and/or the angle of inclination β° of the optical axis produced by the pitching movement of the vehicle, as well as the respective directions of the inclination;
- this correspondingly activates, via the control means 330,430, operation of the motors 113 and/or 203 which, by means of the kinematic chain 112,111 and/or the thrust/recall action of the shaft 203a, cause rotation of the lamp about the optical axis X-X (Figs. 7a,7b,8a,8b) and/or about the transverse axis Y-Y (Figs. 11a,11b).

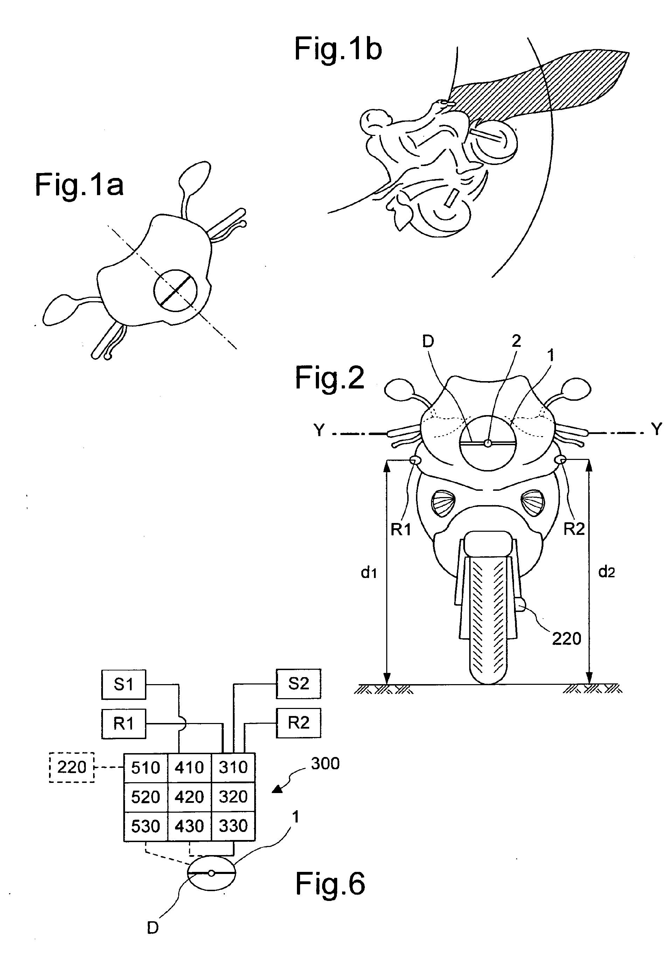

A comparison of Figs. 1a,1b relating to the prior art and Figs. 9,11a,11b relating to the device according to the present invention illustrates the difference between operation of a lamp of the conventional type (Fig. 1b), which during travel around a bend illuminates an area outside the trajectory, and operation of a illumination device according to the present invention (Fig. 9) which, around a bend, keeps the demarcation line D parallel to the road surface and the optical axis correctly directed so as to illuminate correctly the trajectory travelled along and instead leave the adjacent zones unlit.

It is envisaged moreover (Fig. 2) that the device may also be associated with means 220 for controlling predefined auxiliary parameters such as the speed of the vehicle, the external luminosity, any presence of rain and/or fog; said detection means being able to send corresponding signals to reception means 510 and processing means 520 of the control unit 300 which will emit associated control signals for the headlamp 1 in order to vary the luminous distribution thereof (for example, dipped beam or long beam), depending on the actual requirements which are determined by the sensors 220 which, for example, will signal the presence of a light source directly in front and will switch, if activated, the light beam from the long-beam condition to the dipped-beam condition; alternatively, where there are no light sources, and in all cases in compliance with the existing regulations, they will activate the long-beam condition, thereby increasing the visibility.

It is therefore clear how, with the device according to the invention, it is possible both to keep the demarcation line of the light beam emitted by the headlamp parallel to the ground even when travelling around a bend and to compensate for variations in the position of the vehicle about a horizontal transverse axis Y-Y so as to illuminate correctly the road surface along the trajectory actually travelled along by a two-wheeled vehicle and make riding thereof safer and easier.

## Claims

1. Illumination device for a two-wheeled vehicle, comprising:
- a headlamp (1) which is associated with a respective light source (2) and which has, defined thereon, a demarcation line (D) for the light beam emitted,
- first means (R1, R2; R12) for detecting the distance (d1, d2) from a fixed plane of reference points,
- a first unit (100) for adjusting the inclination (α°) of the demarcation line (D) of the headlamp (1) about a longitudinal axis (X-X);
**characterized in that** it comprises:
- second means (S1,S2) for detecting the inclination (β°) of the optical axis about a transverse axis (Y-Y),
- a second unit (200) for adjusting the inclination (β°) of the optical axis of the headlamp about said transverse axis (Y-Y);
- a control unit (300) able to receive signals from said first and second detection means (R1,R2,S1,S2;R12,S1,S2) and selectively activate/deactivate operation of said first control unit (100) and/or second control unit (200) in order to keep the demarcation line (D) and the optical axis of the headlamp correctly oriented with respect to the said fixed surface.

2. Device according to Claim 1, **characterized in that** said sensors (R1,R2) and reference points are positioned on opposite sides and symmetrically with respect to the said device and are able to emit a corresponding signal for the control unit (300).

3. Device according to Claim 1, **characterized in that** said first sensors consist of a gyroscopic part (R12) able to detect the variations in inclination of the vehicle and emit a corresponding signal for the control unit (300).

4. Device according to Claim 1, **characterized in that** said first adjusting unit (100) comprises a support bracket (101a) with two pivots (201) mounted diametrically opposite each other and lying on a horizontal transverse axis (Y-Y) for engagement with respective seats in a flange (10) for fastening to the chassis (11) of the vehicle.

5. Device according to Claim 1, **characterized in that** pulleys (101) with an axis of rotation parallel to the longitudinal axis (X-X) are arranged on said support bracket (101a).

6. Device according to Claim 5, **characterized in that** said pulleys (101) are arranged at relative angles of 120°.

7. Device according to Claim 4, **characterized in that** said pulleys (101) support a ring (110) able to house the headlamp (1) and free to rotate about the longitudinal axis (X-X).

8. Device according to Claim 7, **characterized in that** a motor (113) for operating the ring (110) is mounted on said support bracket (101a).

9. Device according to Claim 8, **characterized in that** said actuating motor (113) is connected to the ring (110) by means of a kinematic chain comprising a pinion (112) mounted on the shaft (113a) and a toothed rim (11) fastened to the inner surface of the said ring (110).

10. Device according to Claim 1, **characterized in that** said second control unit (200) comprises a linear motor (203) fastened to the fixed chassis (11) and connected to the ring (110) of the first unit (100) by means of a ball joint (203b) fastened to the free end of the shaft (203a) of the motor (203).

11. Device according to Claim 1, **characterized in that** said second sensors (S1,S2) are positioned in the longitudinal direction and are able to emit a corresponding signal for the control unit (300).

12. Device according to Claim 1, **characterized in that** said control unit (100) comprises means (110) for receiving signals sent by the sensors (R1,R2,S1,S2;R12,S1,S2), means (120) for processing said signals and means (130) for activating/deactivating the said first means (100) and second means (200) for controlling the headlamp (1).

13. Device according to Claim 12, **characterized in that** said processing means (120) are able to determine the difference in measurement of said distances (d1,d2) of the reference points (R1,R2) from the fixed surface.

14. Device according to Claim 1, **characterized in that** said fixed surface is the road surface.

15. Device according to Claim 12, **characterized in that** said processing means (120) of the control unit (100) are able to calculate the angles of inclination (α°,β°) resulting from rolling/pitching of the vehicle with respect to the road surface.

16. Device according to Claim 1, **characterized in that** it comprises means (220) for detecting predefined auxiliary control parameters.

17. Device according to Claim 16, **characterized in that** said detection means (220) are able to send to the control unit (300) corresponding signals representing said parameters.

18. Device according to Claim 17, **characterized in that** said control unit (300) comprises means (410) for receiving signals sent by the auxiliary sensors (220), means (420) for processing the said signals received, and means (430) for varying the luminous distribution of the beam emitted by the headlamp.
